(19) Europäisches Patentamt
European Patent Office
Office européen des brevets

(11) **EP 4 186 714 B1**

(12) **EUROPÄISCHE PATENTSCHRIFT**

(45) Veröffentlichungstag und Bekanntmachung des Hinweises auf die Patenterteilung:
**27.08.2025  Patentblatt 2025/35**

(21) Anmeldenummer: **22196660.9**

(22) Anmeldetag: **20.09.2022**

(51) Internationale Patentklassifikation (IPC):
**B60C 11/16** *(2006.01)*

(52) Gemeinsame Patentklassifikation (CPC):
**B60C 11/16; B60C 11/1625; B60C 11/1643**

(54) **SPIKE UND KOMBINATION VON SPIKES**

SPIKE AND COMBINATION OF SPIKES

CLOU ET COMBINAISON DE CLOUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2021  DE 102021213319**

(43) Veröffentlichungstag der Anmeldung:
**31.05.2023  Patentblatt 2023/22**

(73) Patentinhaber: **Continental Reifen Deutschland GmbH**
**30175 Hannover (DE)**

(72) Erfinder:
• **Schlittenhard, Jan**
**30165 Hannover (DE)**
• **Wackerhage, Tanja**
**30165 Hannover (DE)**
• **Spechtmeyer, Torben**
**30165 Hannover (DE)**
• **Kott, Burkhard**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
EP-A1- 3 533 628     EP-A1- 3 578 393
EP-A1- 3 590 736     WO-A1-2014/122570
RU-C1- 2 152 318

**Beschreibung**

Die Erfindung betrifft einen Spike zum Verankern im Laufstreifen eines Fahrzeugluftreifens, mit einer Hauptachse, einem einen Fußflansch umfassenden Spikekörper und einem im Spikekörper verankerten Spikepin, wobei der Fußflansch bezüglich einer die Hauptachse enthaltenden, den Spike in Spikehälften teilenden, ersten Ebene in Draufsicht symmetrisch ist und in jeder Spikehälfte eine in Draufsicht gerade verlaufende Seitenfläche aufweist, wobei der Spikepin in Draufsicht bezüglich einer einzigen Ebene symmetrisch ist, wobei diese Ebene

a. senkrecht zur ersten Ebene verläuft,
b. mit der ersten Ebene zusammenfällt oder
c. parallel zur ersten Ebene verläuft,

wobei in einer der Spikehälften ein Orientierungselement ausgebildet ist, welches dem auf der einen Seitenfläche des Fußflansches liegenden Spike und dem auf der anderen Seitenfläche des Fußflansches liegenden Spike einen lagespezifischen, zur ersten Ebene asymmetrischen Schattenriss verleiht.

Ein derartiger Spike ist beispielsweise aus der EP 3 578 393 A1 bekannt. Bei solchen Spikes weist der Spikepin - da der Spikepin ausschließlich bezüglich einer einzigen Ebene symmetrisch ist - eine gewisse Asymmetrie auf, insbesondere bezüglich senkrecht zur ersten Ebene verlaufenden weiteren Ebenen. Die Spikes weisen am Laufstreifen eines Fahrzeugluftreifens daher eine - im Hinblick auf die Fahreigenschaften - besonders vorteilhafte Orientierung auf. Um die Spikes in ihrer bevorzugten Orientierung in den Laufstreifen einzusetzen, ist es erforderlich, die Spikes in einer definierten Lage zur Spikesetzpistole zu transportieren. Mittels der aktuell bekannten Spikeförderer, beispielsweise Vibrationswendelförderer, ist es möglich Spikes automatisch mit hoher Wahrscheinlichkeit mit ihrem Fußflansch voran auf eine zu einer Spikesetzpistole führenden Transporteinrichtung aufzulegen. Auf welcher der beiden Seitenflächen des Fußflansches der Spike zum Liegen kommt, ist jedoch zufallsbedingt. Durch das Orientierungselement, welches dem Spike einen entsprechend asymmetrischen Schattenriss verleiht, ist es mittels eines Kamerasystems möglich, die Orientierung des Spikes auf der Transporteinrichtung festzustellen. Ein falsch orientierter Spike wird von der Transporteinrichtung entfernt, sodass sichergestellt werden kann, dass ausschließlich korrekt orientierte Spikes zum Zuführrohr der Spikesetzpistole geladen und die Spikes nachfolgend in gewünschter Orientierung in den Laufstreifen eingesetzt werden.

Aus der EP 3 533 628 A1 ist ein Spike zum Verankern im Laufstreifen eines Fahrzeugluftreifens bekannt, wobei der Spike einen Spikekörper aus einem Fußflansch, einem taillierten Mittelteil und einem Oberflansch aufweist. Der Oberflansch ist im Wesentlichen kreiszylindrisch und weist eine den Oberflansch lokal abflachende, parallel zur Hauptachse des Spikes verlaufende, ebene Seitenfläche auf. Der Fußflansch weist ebenfalls eine ebene Seitenfläche auf, welche parallel zur ebenen Seitenfläche des Oberflanschs ausgerichtet ist. Der Spike ist bezüglich einer die Hauptachse enthaltenden, die ebenen Seitenflächen halbierenden Ebene in Draufsicht symmetrisch und soll einen guten Sitz in einem Spikeloch aufweisen.

Ferner ist aus der EP 3 590 736 A1 ein Spike zum Verankern im Laufstreifen eines Fahrzeugluftreifens bekannt, wobei der Spike einen Spikepin und einen Spikekörper mit einem Fußflansch aufweist. Der Fußflansch ist bezüglich einer die Hauptachse des Spikes enthaltenden, ersten Ebene sowie einer senkrecht zu dieser verlaufenden, die Hauptachse enthaltenden zweiten Ebene symmetrisch und weist, in Draufsicht betrachtet, eine achteckähnliche Form auf, die von einem imaginären Rechteck einfassbar ist, wobei die Rechteckseiten Seitenflächen des Fußflanschs tangieren bzw. diese mitumfassen. Ferner weist der Fußflansch zwei Paare von vorspringenden Fußflanschabschnitten auf. Der Fußflansch soll für einen gegen Verdrehen gesicherten Sitz der Spikes im Spikeloch sorgen.

Die WO 2014/122570 A1 offenbart einen Spike mit einem Spikekörper und einem Spikepin. Der Spikepin ist, in Draufsicht betrachtet, ausschließlich bezüglich einer einzigen Ebene symmetrisch und weist die Gestalt von einem gleichschenkeligen Trapez, das mit zwei Dreiecken zusammengefügt ist, auf, wobei die Dreieckbasis und die Trapezbasis aneinander anschließen. Die Dreiecke verleihen dem Spikepin abragende Spitzenbereiche, wobei der Spike derart in ein Spikeloch gesetzt wird, dass die Spitzenbereiche in die eine Umfangsrichtung weisen und die kürzere Grundseite des Trapezes in axialer Richtung ausgerichtet ist. Ein Reifen, dessen Laufstreifen mit solchen Spikes versehen ist, soll einen guten Schnee- und Eisgriff aufweisen.

Aus der RU 2 152 318 C1 ist ein Spike mit einem einen Fußflansch umfassenden Spikekörper und einem im Spikekörper verankerten Spikepin bekannt, wobei der Fußflansch bezüglich einer die Hauptachse enthaltenden, den Spike in Spikehälften teilenden, ersten Ebene in Draufsicht symmetrisch ist. Offenbart ist ferner eine Spikesetzeinrichtung mit Ausrichtelementen, die für die gewünschte Ausrichtung der Spikes beim Setzvorgang sorgen.

Der Erfindung liegt die Aufgabe zugrunde, einen Spike der eingangs genannten Art zur Verfügung zu stellen, mittels welchem wesentlich weniger falsch orientierte Spikes auf der Transporteinrichtung anfallen.

Gelöst wird die gestellte Aufgabe erfindungsgemäß dadurch, dass die Spikehälfte mit Orientierungselement eine erste Masse und die Spikehälfte ohne Orientierungselement eine mit der ersten Masse überstimmende oder gegenüber der ersten Masse größere zweite Masse aufweist.

Stimmt die zweite Masse mit der ersten Masse überein, ist die Wahrscheinlichkeit, dass sich der Spike beim Auflegen auf die zur Spikesetzpistole führenden Transporteinrichtung auf die eine oder die andere Spikehälfte legt, gleichgroß oder zumindest theoretisch gleichgroß. Ist die zweite Masse größere als die erste Masse, neigt der Spike dazu, beim Auflegen auf die Transporteinrichtung auf die Spikehälfte ohne Orientierungselement zu kippen. Im zweiten Fall ist also die Wahrscheinlichkeit, dass sich der Spike auf die Spikehälfte ohne Orientierungselement legt größer als die Wahrscheinlichkeit, dass sich der Spike auf die Spikehälfte mit Orientierungselement legt. Ist die Spikesetzpistole nun derart ausgeführt, dass die auf die Spikehälfte ohne Orientierungselement gekippte Lage die für den Setzvorgang gewünschte Lage ist, sind in der Folge auf der Transporteinrichtung kaum noch bzw. deutlich weniger falsch orientierte Spikes vorzufinden. Der Setzvorgang ist somit schneller und effizienter durchführbar und lässt sich somit weiter optimieren.

Gemäß einer bevorzugten Ausführung umfasst der Spikekörper einen taillierten Mittelteil, auf welchem das Orientierungselement ausgebildet ist, wobei das Orientierungselement vorzugsweise über den Bereich der Taillierung verläuft. Ein derartiges Orientierungselement hat vorteilhafter Weise keinen oder nahezu keinen Einfluss auf die sonstigen Eigenschaften des Spikes.

Eine weitere bevorzugte Ausführung ist dadurch gekennzeichnet, dass das Orientierungselement aus einer Materialaussparung und einem Materialaufschlag gebildet ist,

i) wobei das Volumen des Materialaufschlages mit dem Volumen der Materialaussparung übereinstimmt und wobei sich der Massenmittelpunkt des Spikepins in der Spikehälfte ohne Orientierungselement befindet oder
ii) wobei das Volumen des Materialaufschlages kleiner ist als das Volumen der Materialaussparung und wobei sich der Massenmittelpunkt des Spikepins vorzugsweise in der Spikehälfte ohne Orientierungselement befindet.

Bei der Variante i) wird die größere Masse der Spikehälfte ohne Orientierungselement somit durch die entsprechende Lage des Spikepins erzielt.

Bei der Variante ii) wird die größere Masse der Spikehälfte ohne Orientierungselement zumindest durch die entsprechend ausgelegten Volumen des Materialaufschlages und der Materialaussparung erzielt.

Nachfolgend wird auf eine Vielzahl bevorzugter, beliebig miteinander kombinierbarer Ausführungsvarianten der letztgenannten Ausführung eingegangen.

Bei einer ersten bevorzugten Ausführungsvariante weist der Massenmittelpunkt des Spikepins zur Hauptachse des Spikes einen lichten Abstand von bis zu 0,50 mm, insbesondere von bis zu 0,25 mm, bevorzugt von bis zu 0,10 mm, auf.

Eine zweite bevorzugte Ausführungsvariante ist dadurch gekennzeichnet, dass bei Variante ii) das Volumen des Materialaufschlages zumindest 80%, insbesondere höchstens 90%, des Volumens der Materialaussparung beträgt. Dies begünstigt die Wahrscheinlichkeit, dass sich der Spike auf die Spikehälfte ohne Orientierungselement legt. Da sich das Volumen des Materialaufschlages vom Volumen der Materialaussparung nur geringfügig unterscheidet, nimmt das Orientierungselement vorteilhafter Weise keinen oder nahezu keinen Einfluss auf die sonstigen Eigenschaften des Spikes, insbesondere gibt es keinen oder kaum Einfluss auf die Bettungssteifigkeit.

Eine dritte bevorzugte Ausführungsvariante ist dadurch gekennzeichnet, dass die Materialaussparung und der Materialaufschlag eine gemeinsame Begrenzungsfläche aufweisen, welche sich aus einem den Materialaufschlag begrenzenden Flächenteil und einem die Materialaussparung begrenzenden Flächenteil zusammensetzt, wobei der den Materialaufschlag begrenzende Flächenteil im die Hauptachse enthaltenden Querschnitt betrachtet, gerade sowie zur Hauptachse unter einem Winkel von 0° bis ±18° verläuft. Ein solcher Flächenteil sorgt für einen entsprechend geraden Abschnitt beim Schattenriss des Spikes und lässt sich hervorragend detektieren.

Gemäß einer vierten bevorzugte Ausführungsvariante ist vorgesehen, dass die Materialaussparung des Orientierungselementes an den Fußflansch angrenzt oder in diesen hineinragt.

Gemäß einer weiteren bevorzugten Ausführung ist der Fußflansch bezüglich einer zweiten Ebene, welche durch die Hauptachse und in Draufsicht senkrecht zur ersten Ebene verläuft, symmetrisch. Dies ist für eine gleichmäßige Bettungssteifigkeit des Spikes und einen guten Sitz des Spikes im Laufstreifen vorteilhaft.

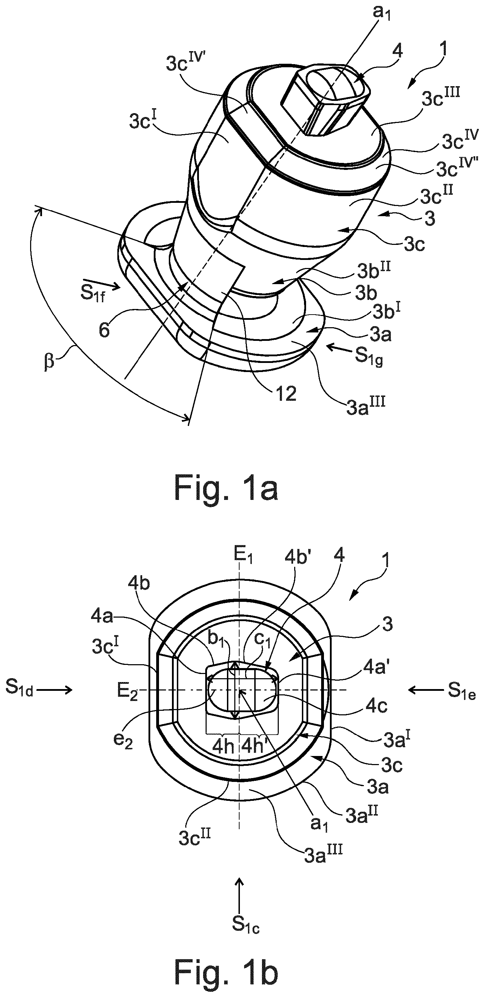

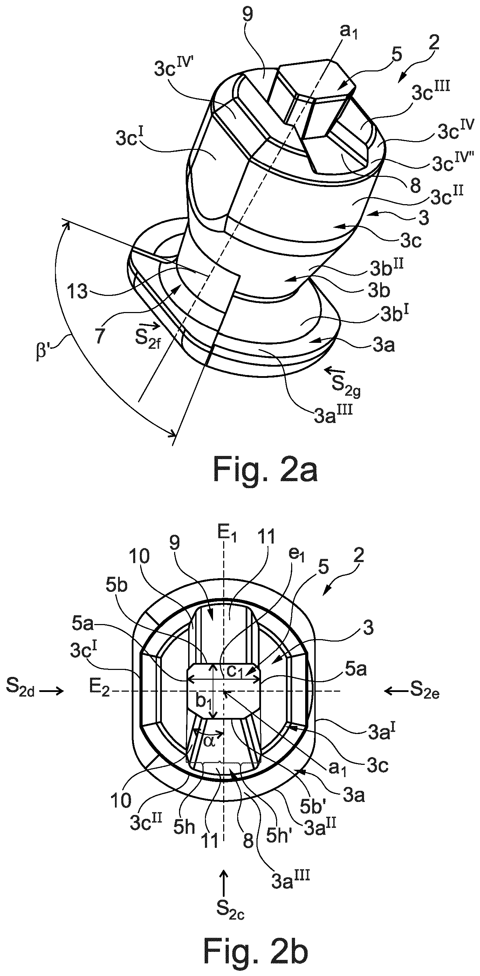

Eine besonders bevorzugte Ausführung besteht in der Kombination der zuletzt genannten bevorzugten Ausführung mit den oben genannten Varianten i) und ii), wobei diese Ausführung dadurch gekennzeichnet ist, dass sich der Massenmittelpunkt des Spikepins auf der zweiten Ebene befindet. Der Massenmittelpunkt ist daher gegenüber den in Fig. 1b und Fig. 2b gezeigten Ausführungen, bei welchen sich der Massenmittelpunkt auf der Hauptachse $a_1$ des Spikes befindet, ausschließlich in Richtung der Ebene $E_2$ verschoben.

Bei den beiden zuletzt genannten Ausführungen ist es bevorzugt, wenn das Orientierungselement bezüglich der zweiten Ebene symmetrisch ist.

Gemäß einer weiteren bevorzugten Ausführung umfasst der Spikekörper einen Oberflansch, welcher in jeder Spikehälfte eine ebene Seitenfläche aufweist, welche in Draufsicht parallel zu in dieser Spikehälfte verlaufenden Seitenfläche des Fußflansches verläuft. Der Spike legt sich somit auf der Transporteinrichtung auf die Seitenfläche des Fußflansches und auf die entsprechende Seitenfläche des Oberflansches.

Die Erfindung betrifft ferner die Kombination von Spikes eines ersten Typs mit insbesondere hinsichtlich einer guten Seitenkraftübertragung ausgestalteten Spikepins und Spikes eines zweiten Typs mit insbesondere hinsichtlich einer guten Umfangskraftübertragung ausgestalteten Spikepins, zum Bespiken eines Laufstreifens eines Fahrzeugluftreifens, wobei die Spikes gemäß Anspruch 6 ausgeführt sind. Die Kombination ist dadurch gekennzeichnet, dass bei Spikes des einen - ersten oder zweiten - Typs der Winkel des Flächenteiles, welcher den Materialaufschlag begrenzt, 8° bis 18°, insbesondere bis zu 15°, bevorzugt bis zu 10°, beträgt und dass bei Spikes des anderen - ersten oder zweiten - Typs der Winkel des Flächenteiles, welcher den Materialaufschlag begrenzt, 0° bis ±7°, insbesondere 0° bis ±3°, beträgt. Solche Materialaufschläge verleihen den Spikes voneinander hervorragend unterscheidbare asymmetrische Schattenrisse, sodass sich die Spikes des ersten Typs und die Spikes des zweiten Typs auf zuverlässige und schnelle Weise in die jeweils vorgesehenen Spikelöcher des Laufstreifen einsetzen lassen.

Die Erfindung betrifft ferner einen Fahrzeugluftreifen mit einem Laufstreifen mit Profilpositiven mit Spikes gemäß der Kombination. Der entsprechend automatisch mit Spikes versehene Laufstreifen, ist daher mit an Sicherheit grenzender Wahrscheinlichkeit auf die gewünschte Weise mit Spikes des ersten Typs und Spikes des zweiten Typs versehen.

Weitere Merkmale, Vorteile und Einzelheiten der Erfindung werden nun anhand der Zeichnung, die schematisch Ausführungsbeispiele der Erfindung zeigt, näher beschrieben. Dabei zeigen

Fig. 1a eine Schrägansicht eines Spikes eines ersten Typs gemäß einer Ausführungsvariante der Erfindung,

Fig. 1b eine Draufsicht auf den Spike aus Fig. 1a,

Fig. 1c eine Seitenansicht des Spikes gemäß der in Fig. 1b durch den Pfeil $S_{1c}$ angedeuteten Sichtrichtung,

Fig. 1d eine Seitenansicht des Spikes gemäß der in Fig. 1b durch den Pfeil $S_{1d}$ angedeuteten Sichtrichtung,

Fig. 1e eine Seitenansicht des Spikes gemäß der in Fig. 1b durch den Pfeil $S_{1e}$ angedeuteten Sichtrichtung,

Fig. 1f eine vergrößerte Detailansicht gemäß der in Fig. 1a durch den Pfeil $S_{1f}$ angedeuteten Sichtrichtung,

Fig. 1g eine vergrößerte Detailansicht gemäß der in Fig. 1a durch den Pfeil $S_{1g}$ angedeuteten Sichtrichtung,

Fig. 1h eine seitliche Ansicht des Spikes aus Fig. 1a in einer ersten liegenden Lage,

Fig. 1i eine seitliche Ansicht des Spikes aus Fig. 1a in einer zweiten liegenden Lage,

Fig. 2a eine Schrägansicht eines Spikes eines zweiten Typs gemäß einer Ausführungsvariante der Erfindung,

Fig. 2b eine Draufsicht auf den Spike aus Fig. 2a,

Fig. 2c eine Seitenansicht des Spikes gemäß der in Fig. 2b durch den Pfeil $S_{2c}$ angedeuteten Sichtrichtung,

Fig. 2d eine Seitenansicht des Spikes gemäß der in Fig. 2b durch den Pfeil $S_{2d}$ angedeuteten Sichtrichtung,

Fig. 2e eine Seitenansicht des Spikes gemäß der in Fig. 2b durch den Pfeil $S_{2e}$ angedeuteten Sichtrichtung,

Fig. 2f eine vergrößerte Detailansicht gemäß der in Fig. 2a durch den Pfeil $S_{2f}$ angedeuteten Sichtrichtung,

Fig. 2g eine vergrößerte Detailansicht gemäß der in Fig. 2a durch den Pfeil $S_{2g}$ angedeuteten Sichtrichtung,

Fig. 2h eine seitliche Ansicht des Spikes aus Fig. 2a in einer ersten liegenden Lage und

Fig. 2i eine seitliche Ansicht des Spikes aus Fig. 2a in einer zweiten liegenden Lage.

Die Erfindung betrifft einen Spike für einen Fahrzeugluftreifen, welcher ein Reifen für Kraftfahrzeuge, insbesondere für mehrspurige Kraftfahrzeuge, ist sowie eine Kombination von Spikes eines ersten Typs und Spikes eines zweiten Typs für einen solchen Fahrzeugluftreifen.

Fig. 1a bis Fig. 1e zeigen Ansichten eines Spikes 1 eines ersten Typs. Fig. 2a bis Fig. 2e zeigen analoge Ansichten eines Spikes 2 eines zweiten Typs. Der Spike 1, 2 weist eine bei aufrecht stehendem Spike 1, 2 in vertikaler Richtung verlaufende Hauptachse $a_1$ auf, welche in Fig. 1a, Fig. 2a jeweils durch eine Linie sowie in Fig. 1b, Fig. 2b jeweils durch einen Pfeil angedeutet ist.

Wie Fig. 1a bzw. Fig. 2a zeigt, besteht der Spike 1, 2 aus einem Spikekörper 3 und einem in diesem verankerten Spikepin 4 (Spike 1), 5 (Spike 2). In Fig. 1b und Fig. 2b ist jeweils eine Ebene $E_1$ und eine Ebene $E_2$ eingezeichnet, welche in Draufsicht als gerade Linien erscheinen, orthogonal zueinander sowie jeweils durch die Hauptachse $a_1$ verlaufen.

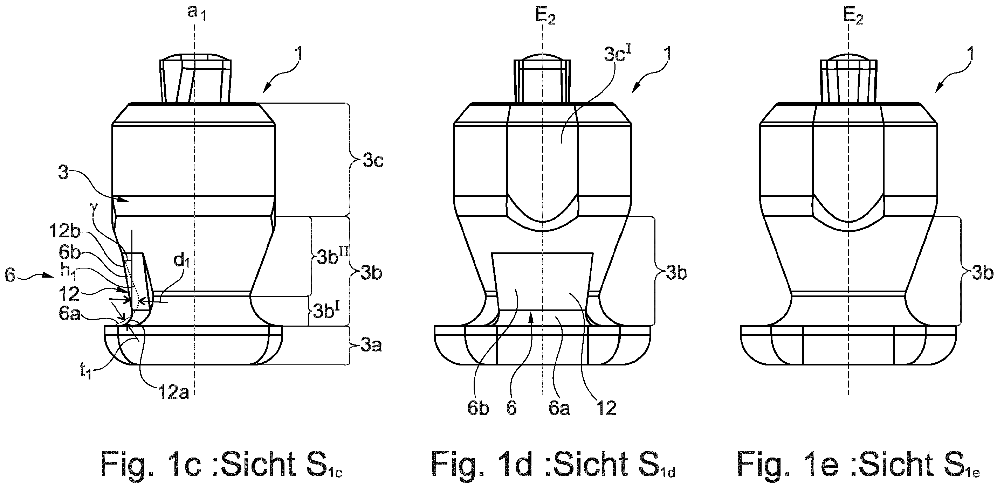

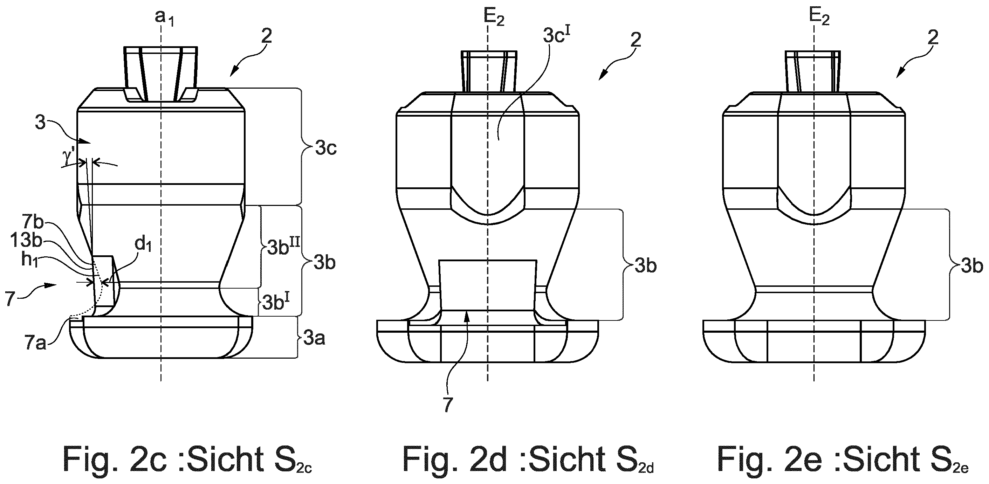

Gemäß Fig. 1a und Fig. 2a setzt sich der Spikekörper 3 aus einen Fußflansch 3a, einen in seinem mittleren Bereich taillierten Mittelteil 3b und einen Oberflansch 3c zusammen (vergl. Fig. 1c, Fig. 2c). Der Mittelteil 3b ist mittig auf dem Fußflansch 3a ausgebildet und der Oberflansch 3c ist auf dem Mittelteil 3b ausgebildet. Der Mittelteil 3b ist in Draufsicht allseitig von Oberflansch 3c überragt, welcher seinerseits in Draufsicht allseitig vom Fußflansch 3a überragt ist (Fig. 1b, Fig. 2b).

Gemäß Fig. 1b und Fig. 2b weist der Fußflansch 3a in Draufsicht eine im Wesentlichen ovale Form, zwei in der längeren Erstreckung des Ovals ausgerichtete, parallel zueinander verlaufende, ebene Seitenflächen $3a^I$, zwei einander gegenüberliegende gerundete Seitenflächen $3a^{II}$ und eine ebene Oberseite $3a^{III}$ auf. Die Ebene $E_1$ ist in Draufsicht (Sichtrichtung gemäß der Ausrichtung der Hauptachse $a_1$) in Längserstreckung des Fußflansches 3a ausgerichtet, sodass die ebenen Seitenflächen $3a^I$ in Draufsicht gerade und parallel zur Ebene $E_1$ verlaufen und die gerundeten Seitenflächen $3a^{II}$ in Draufsicht jeweils von der Ebene $E_1$ halbiert sind. Der Fußflansch 3a ist in Draufsicht symmetrisch bezüglich der Ebenen $E_1$, $E_2$.

Gemäß Fig. 1a und Fig. 2a weist der Mittelteil 3b im Wesentlichen die Form eines einschaligen Rotationshyperboloides und daher in seinem mittleren Bereich eine Taillierung bzw. Verengung auf. Der Mittelteil 3b ist bezüglich der Ebene $E_2$ (vergl. Fig. 1d, Fig. 1e, Fig. 2d, Fig. 2e) symmetrisch, setzt sich aus einem unmittelbar an den Fußflansch 3a angrenzenden, zu diesem eine Übergangsrundung bildenden, unteren Mittelteilabschnitt $3b^I$ und einem konischen, oberen Mittelteilabschnitt $3b^{II}$ zusammen (vergl. Fig. 1c, Fig. 2c), sodass sich die Mittelteilabschnitte $3b^I$, $3b^{II}$ an der Taillierung treffen. Ferner ist am Mittelteil 3b ein Orientierungselement 6 (Spike 1), 7 (Spike 2) ausgebildet, auf dessen Ausgestaltung noch genauer eingegangen wird.

Wie Fig. 1a und Fig. 2a zeigen, ist der Oberflansch 3c im Wesentlichen kreiszylindrisch, bezüglich der Ebene $E_1$ (Fig. 1b, Fig. 2b) symmetrisch, wobei der Oberflansch 3c zwei in den oberen Mittelteilabschnitt $3b^{II}$ hineinragende, ebene Seitenflächen $3c^I$ (vergl. Fig. 1b, Fig. 2b), zwei von der Ebene $E_1$ jeweils halbierte, gerundete Seitenflächen $3c^{II}$ (vergl. Fig. 1b, Fig. 2b) und eine ebene Oberseite $3c^{III}$ aufweist. Die ebenen Seitenflächen $3c^I$ verlaufen, in Draufsicht betrachtet, gerade, parallel zur Ebene $E_1$ und daher parallel zu den ebenen Seitenflächen $3a^I$ des Fußflansches 3a (Fig. 1b, Fig. 2b) und die gerundeten Seitenflächen $3c^{II}$ verlaufen, in Draufsicht betrachtet, Großteils parallel zu den gerundeten Seitenflächen $3a^{II}$ des Fußflansches 3a (Fig. 1b, Fig. 2b). Die Oberseite $3c^{III}$ verläuft parallel zur Oberseite $3a^{III}$ des Fußflansches 3a, ist an ihrem äußeren Umfang von einem schmalen, Richtung Fußflansch 3a schräg abfallenden Randbereich $3c^{IV}$ umlaufen, welcher sich aus an die ebenen Seitenflächen $3c^I$ anschließenden, ebenen Randflächen $3c^{IV'}$ und an die gerundeten Seitenflächen $3c^{II}$ anschließenden, gerundeten Randflächen $3c^{IV''}$ zusammensetzt.

Gemäß Fig. 1a und Fig. 1b ist der Oberflansch 3c des Spikes 1 ferner bezüglich der Ebene $E_2$ symmetrisch.

Gemäß Fig. 2a und Fig. 2b weist der Oberflansch 3c des Spikes 2 zwei vom Spikepin 5 ausgehende, die Oberseite $3c^{III}$ und die jeweilige gerundete Randfläche $3c^{IV''}$ unterbrechende Ausnehmungen 8, 9 auf. Wie Fig. 2b zeigt, sind die Ausnehmungen 8, 9 in Draufsicht jeweils symmetrisch bezüglich der Ebene $E_1$ und bezüglich der Hauptachse $a_1$ um 180° zueinander versetzt, liegen einander somit durch den Spikepin 5 getrennt gegenüber. Die Ausnehmungen 8, 9 weisen jeweils eine parallel zur Hauptachse $a_1$ gemessene konstante Tiefe von 0,3 mm bis 1,5 mm auf, sind in Draufsicht jeweils im Wesentlichen U-förmig und sind ferner jeweils durch zwei, je einen U-Schenkel bildende, bis zum Spikepin 5 verlaufende, ebene Begrenzungswände 10 und einen parallel zur Oberseite $3c^{III}$ verlaufenden Boden 11 begrenzt. Gemäß Fig. 2b verlaufen die Begrenzungswände 10 der Ausnehmung 8 in Draufsicht zur Symmetrieebene $E_1$ unter einem Winkel $\alpha$ von 10° bis 20°, wobei die Ausnehmung 8 ausgehend vom Spikepin 5 in Richtung ihres offenen Endes kontinuierlich breiter wird. Die Begrenzungswände 10 der Ausnehmung 9 verlaufen in Draufsicht parallel zur Ebene $E_1$. Die Ausnehmungen 8, 9 wirken als "Eisreservoire", dienen also dem Abtransport bzw. der Aufnahme von Eisspänen, die beim Abrollen des Reifens auf eisigen Fahrbahnen bzw. Untergründen entstehen, wenn der Spike 2 durch das Eis gezogen wird und dabei Rinnen in die Eisoberfläche fräst. Die Ausnehmungen 8, 9 vermeiden somit ein Ansammeln von Eisspänen um den Spike 2.

Gemäß Fig. 1b und Fig. 2b ist der Spikepin 4, 5 ein in Draufsicht länglicher Bauteil mit einer größten Länge $c_1$ und einer größten Breite $b_1$, wobei $c_1 > b_1$ gilt. Der Spikepin 4, 5 ist derart ausgeführt und im Spikekörper 3 verankert, dass er in Draufsicht in Erstreckungsrichtung der Ebene $E_2$ langgestreckt ist, die Ebene $E_1$ den Spikepin 4, 5 in zwei Spikepinhälften 4h, 4h' (Spikepin 4), 5h, 5h' (Spikepin 5) mit übereinstimmender Masse "teilt" und die Schwerachse des Spikepins 4, 5 mit der Hauptachse $a_1$ zusammenfällt. Die Schwerachse ist bekannter Weise die Achse durch den Schwerpunkt (Massenmittelpunkt). Der Spikepin 4 des Spikes 1 ist insbesondere hinsichtlich einer guten Seitenkraftübertragung ausgestaltet. Der Spikepin 5 des Spikes 2 ist insbesondere hinsichtlich einer guten Umfangskraftübertragung, also einer guten Übertragung von Brems- und Traktionskräften ausgestaltet.

Wie Fig. 1b zeigt, ist der Spikepin 4 in Draufsicht ausschließlich bezüglich einer Ebene $e_2$ (strichpunktiert eingezeichnet) symmetrisch, wobei die Ebene $e_2$ senkrecht zur Ebene $E_1$ verläuft und beim Ausführungsbeispiel mit der Ebene $E_2$ zusammenfällt. Der Spikepin 4 weist in Draufsicht die Gestalt von zwei an ihrer Basis (längere Grundseite) zusammengefügten, unterschiedliche Höhen aufweisenden gleichschenkeligen Trapezen auf, sodass sich die Stelle mit der größten Breite $b_1$ an der gemeinsamen Basis der Trapeze befindet. An seinem äußeren Umfang weist der Spikepin 4 eine Griffkante 4a, zwei Griffkanten 4b, eine Griffkante 4a' und zwei Griffkanten 4b' auf. Die Griffkanten 4a, 4a' verlaufen senkrecht zur Ebene $e_2$, wobei die Griffkante 4a die kürzere Grundseite des Trapezes mit der kleineren Höhe und die Griffkante 4a' die kürzere Grundseite des Trapezes mit der größeren Höhe bildet. Die Griffkanten 4b bilden die Trapezschenkel des Trapezes mit der kleineren Höhe, die Griffkanten 4b' bilden die Trapezschenkel des Trapezes mit der größeren Höhe. Der Spikepin 4 weist an seiner Oberseite eine optional vorgesehene Abriebschutzkuppel 4c auf, die nicht Gegenstand der Erfindung ist und in üblicher Weise ausgeführt sein kann. Die Spikepinhälfte 4h umfasst die Griffkante 4a und die Spikepinhälfte 4h' umfasst die Griffkante 4a', sodass die Spikepinhälfte 4h in ihrer geometrischen Form von jener der Spikepinhälfte 4h' abweicht.

Wie Fig. 2b zeigt, ist der Spikepin 5 in Draufsicht ausschließlich bezüglich einer Ebene $e_1$ (strichpunktiert eingezeichnet) symmetrisch, wobei die Ebene $e_1$ senkrecht zur Ebene $E_2$ verläuft und beim Ausführungsbeispiel mit der Ebene $E_1$ zusammenfällt. Der Spikepin 5 ist in Draufsicht nahezu rechteckig, wobei die Eckbereiche abgeschrägt sind, weist an seinem äußeren Umfang zwei parallel zur Ebene $e_1$ verlaufende, gleichlange gerade Griffkanten 5a und zwei senkrecht zur Ebene $e_1$ orientierte und von dieser halbierte, ungleichlange gerade Griffkanten 5b, 5b' auf. Die Griffkante 5b ist länger als die Griffkante 5b', wobei die Griffkante 5b der Ausnehmung 9 und die Griffkante 5b' der Ausnehmung 8 zugewandt ist. Die Spikepinhälften 5h, 5h' weisen übereinstimmende geometrischen Formen auf.

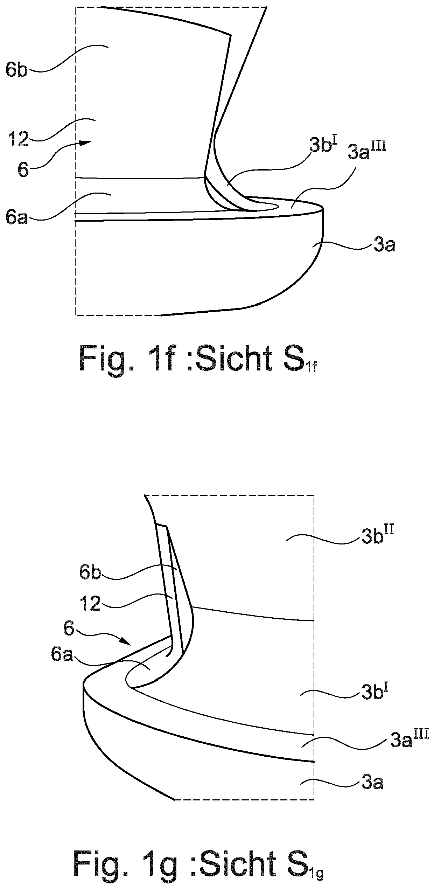

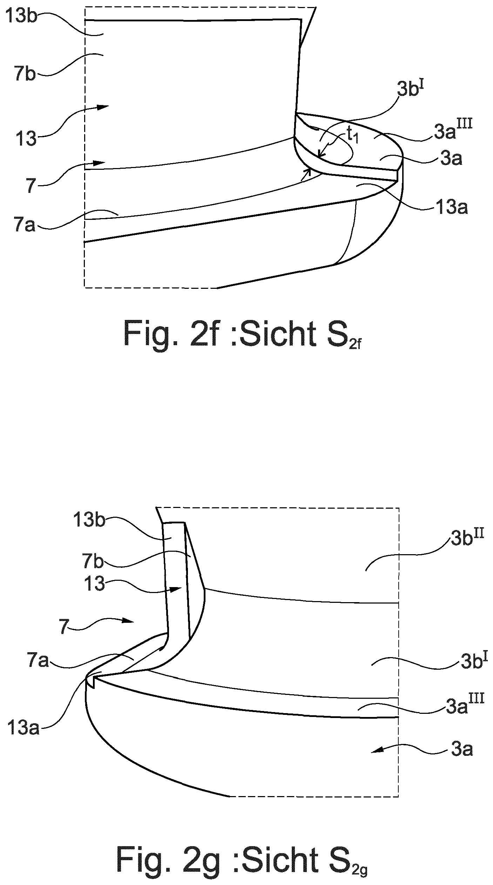

Gemäß Fig. 1a, Fig. 1d, Fig. 2a und Fig. 2d befindet sich das bereits erwähnte, am Mittelteil 3b des Spikekörpers 3 ausgebildete Orientierungselement 6, 7 im Bereich unter der einen ebenen Seitenfläche 3c$^I$, ist symmetrisch bezüglich der Ebene $E_2$ (Fig. 1d, Fig. 2d) und unterbricht abschnittsweise die Außenkontur des Mittelteiles 3b. Wie Fig. 1f, Fig. 1g, Fig. 2f und Fig. 2g zeigen, ist das Orientierungselement 6, 7 von einer Materialaussparung 6a, 7a und einem Materialaufschlag 6b, 7b gebildet. Der Materialaufschlag 6b, 7b besteht aus dem Material des Spikekörpers 3. In Fig. 1c und Fig. 2c ist jeweils eine Hilfslinie $h_1$ gestrichelt eingezeichnet, welche der über das Orientierungselement 6, 7 fortgesetzten, "gedachten", ansonsten vorliegenden Außenkontur des Mittelteiles 3b (Spike 1, Fig. 1c) bzw. des Mittelteils 3b und des Fußflansches 3a (Spike 2, Fig. 2c) entspricht. Nachfolgend wird zunächst auf die Ausgestaltung des Orientierungselements 6 und anschließend auf jene des Orientierungselementes 7 eingegangen.

Gemäß Fig. 1f und Fig. 1g weisen die Materialaussparung 6a und der Materialaufschlag 6b eine gemeinsame, zur Oberseite 3a$^{III}$ des Fußflansches 3a verlaufende, symmetrisch bezüglich der Ebene $E_2$ (Fig. 1d) ausgeführte Begrenzungsfläche 12 (vergl. Fig. 1d) auf, welche stetig ("knickpunktfrei") in die Oberseite 3a$^{III}$ des Fußflansches 3a übergeht, wobei die Materialaussparung 6a angrenzend an den Fußflansch 3a und der Materialaufschlag 6b oberhalb der Materialaussparung 6a ausgebildet ist. Die Materialaussparung 6a ist ausschließlich im Bereich des unteren Mittelteilabschnittes 3b$^I$ sowie im Querschnitt sichelförmig (Fig. 1f) ausgebildet und weist eine senkrecht zum Niveau der Übergangsrundung, also dem Niveau des unteren Mittelteilabschnittes 3b$^I$, ermittele maximale Tiefe $t_1$ (Fig. 1c, Tiefe an der tiefsten Stelle) von 0,05 mm bis 0,80 mm, insbesondere von bis zu 0,20 mm, auf. Die maximale Tiefe $t_1$ ist, im die Hauptachse $a_1$ enthaltenden Querschnitt betrachtet, senkrecht zu einer lokal an das erwähnte Niveau angelegten Tangente ermittelt. Wie Fig. 1g zeigt, befindet sich der Materialaufschlag 6b zum Teil im Bereich des unterem Mittelteilabschnittes 3b$^I$ und zum Teil im Bereich des oberen Mittelteilabschnittes 3b$^{II}$ und weist eine analog zur maximalen Tiefe $t_1$ ermittelte maximale Dicke $d_1$ (Fig. 1c, Dicke an der dicksten Stelle) von 0,05 mm bis 0,80 mm, insbesondere von bis zu 0,20 mm, auf. Gemäß Fig. 1a erstreckt sich die Begrenzungsfläche 12, ermittelt am Niveau der Oberseite 3a$^{III}$ des Fußflansches 3a und bezogen auf die Hauptachse $a_1$, über einen Zentriwinkel $\beta$ von 90° ± 1° und setzt sich aus einem den Materialaufschlag 6b begrenzenden Flächenteil 12b (Fig. 1c) und einem die Materialaussparung 6a begrenzenden Flächenteil 12a (Fig. 1c) zusammen. Gemäß Fig. 1c verläuft der Flächenteil 12a, im die Hauptachse $a_1$ enthaltenden Querschnitt betrachtet (die gezeigte Seitenansicht ist in dieser Hinsicht übereinstimmend zum Querschnitt), kreisbogenförmig. Der Flächenteil 12b verläuft, im in die Hauptachse $a_1$ enthaltenden Querschnitt betrachtet, gerade sowie zur Hauptachse $a_1$ unter eine Winkel $\gamma$ von 8° bis 18°, insbesondere von bis zu 15°, bevorzugt von bis zu 10°, wobei der Flächenteil 12b, im erwähnten Querschnitt betrachtet, gleichsinnig zum oberen Mittelteilabschnitt 3b$^{II}$ geneigt ist. Das Volumen des Materialaufschlages 6b beträgt 80% bis 100%, bevorzugt höchstens 90%, des Volumens der Materialaussparung 6a.

Gemäß Fig. 2f und Fig. 2g weisen die Materialaussparung 7a und der Materialaufschlag 7b eine gemeinsame Begrenzungsfläche 13 auf, welche unter das Niveau der Oberseite 3a$^{III}$ des Fußflansches 3a verläuft. Die Materialaussparung 7a ist im Bereich des unteren Mittelteilabschnittes 3b$^I$ sowie im Bereich des Fußflansches 3a ausgebildet und weist eine senkrecht zum Niveau des unteren Mittelteilabschnittes 3b$^I$ ermittele maximale Tiefe $t_1$ (Fig. 2f, Tiefe an der tiefsten Stelle, Ermittlung analog wie bei der Materialaussparung 6a) von 0,05 mm bis 0,80 mm, insbesondere von bis zu 0,20 mm, auf. Wie Fig. 2g zeigt, befindet sich der Materialaufschlag 7b zum Teil im Bereich des unterem Mittelteilabschnittes 3b$^I$ und zum Teil im Bereich des oberen Mittelteilabschnittes 3b$^{II}$ und weist eine maximale Dicke $d_1$ (Fig. 2c, Dicke

an der dicksten Stelle, Ermittlung analog wie bei Materialaufschlag 6b) von 0,05 mm bis 0,80 mm, insbesondere von bis zu 0,20 mm, auf. Gemäß Fig. 2a erstreckt sich die Begrenzungsfläche 13 bezogen auf die Hauptachse $a_1$ über einen Zentriwinkel $\beta'$ von 90°±1° und setzt sich aus einem im Querschnitt gerade verlaufenden, den Materialaufschlag 7b begrenzenden Flächenteil 13b (Fig. 2c, Fig. 2f, Fig. 2g) und einen die Materialaussparung 7a begrenzenden Flächenteil 13a (Fig. 2f, Fig. 2g) zusammen. Der Flächenteil 13a verläuft, im die Hauptachse $a_1$ enthaltenden Querschnitt betrachtet, ausgehend vom Flächenteil 13b zunächst kreisbogenförmig und anschließend parallel zur Oberseite $3a^{III}$ des Fußflansches 3a (Fig. 2f). Der Flächenteil 13b verläuft, im die Hauptachse $a_1$ enthaltenden Querschnitt betrachtet, zur Hauptachse $a_1$ unter eine Winkel $\gamma'$ (Fig. 2c) von 0° bis ±7°, insbesondere von 0° bis ±3°. Der Flächenteil 13b ist daher, im erwähnten Querschnitt betrachtet, bezüglich der Hauptachse $a_1$ gleichsinnig (Winkel $\gamma'$ bis +7°, insbesondere bis +3°) oder gegensinnig (Winkel $\gamma'$ bis -7°, insbesondere bis -3°) zum oberen Mittelteilabschnitt $3b^{II}$ geneigt. Alternativ ist der Flächenteil 13b, im erwähnten Querschnitt betrachtet, bezüglich der Hauptachse $a_1$ nicht geneigt, sondern verläuft zu dieser parallel (Winkel $\gamma'$ 0°). Das Volumen des Materialaufschlages 7b beträgt insbesondere 80% bis 100%, bevorzugt höchstens 90%, des Volumens der Materialaussparung 7a.

Nachfolgend wird auf die bevorzugte Orientierung des Spikes 1, 2 am Laufstreifen eines Fahrzeugluftreifens und anschließend auf den Ablauf des Setzvorganges eingegangen. Die Spikes 1, 2 werden in am Laufstreifen eines Fahrzeugluftreifens ausgeformte Spikelöcher eingesetzt.

Wie bereits erläutert, weisen die Spikes 1, 2 ausschließlich bezüglich der Ebene $e_1$ (Spike 2) bzw. ausschließlich bezüglich der Ebene $e_2$ (Spike 1) symmetrisch ausgeführte Spikepins 4, 5 mit Spikepinhälften 4h, 4h' (Spikepin 4), 5h, 5h' (Spikepin 5) auf. Die bevorzugte Orientierung der Spikes 1 am Laufstreifen ist derart, dass sich die Spikepinhälfte 4h' näher zur Reifenäquatorialebene befindet als die Spikepinhälfte 4h, wobei die Ebene $e_2$ zur axialen Richtung unter einem Winkel von 0° bis 20° verläuft und wobei - auf einem Laufstreifen mit laufrichtungsgebundener Profilierung - beim Abrollen des Reifens beim Vorwärtsfahren die Griffkanten 4b vorzugsweise vor der jeweils anschließenden Griffkante 4b' in den Untergrund eintreten. Die bevorzugte Orientierung der Spikes 2 am Laufstreifen ist derart, dass die Ebene $e_1$ in Umfangsrichtung orientiert ist, wobei - auf einem Laufstreifen mit laufrichtungsgebundener Profilierung - beim Abrollen des Reifens beim Vorwärtsfahren die Griffkante 5b' vor der Griffkante 5b in den Untergrund eintritt.

Die Spikes 1, 2 werden entweder gemeinsam in einem Vorratsbehälter zur Verfügung gestellt oder es werden Spikes 1 in einem ersten Vorratsbehälter und Spikes 2 in einem zweiten Vorratsbehälter zur Verfügung gestellt.

Die Spikes 1, 2 werden insbesondere mittels eines Spikeförderers, insbesondere eines Vibrationswendelförderers, aus dem Vorratsbehälter auf eine Transporteinrichtung aufgebracht, auf welcher die Spikes 1, 2 flach liegend zu einem zu einer Spikesetzpistole führenden Zuführrohr transportiert werden. Der Querschnitt des Zuführrohres ist bekannter Weise auf die jeweilige Spikegeometrie abgestimmt, sodass sich die Spikes 1, 2 wegen ihres asymmetrischen, unrunden Fußflansches 3a im Zuführrohr nicht verdrehen können. Im Zuführrohr gibt es für die Spikes 1, 2 jedoch grundsätzlich zwei mögliche Orientierungen. Die Spikes 1, 2 müssen - bedingt durch ihren asymmetrischen Spikepin - in einer bestimmten Orientierung in das Zuführrohr eingebracht werden, damit diese nachfolgend in korrekter Orientierung in die Spikelöcher des Laufstreifens eingesetzt werden.

Sollen sowohl die Spikes 1 in bestimmte (zuvor ausgewählte) Spikelöcher als auch die Spikes 2 in bestimmte (zuvor ausgewählte) Spikelöcher eingesetzt werden, ist es - bei Verwendung eines einzigen sowohl Spikes 1 als auch Spikes 2 enthaltenden Vorratsbehälters erforderlich - die Spikes 1 von den Spikes 2 zu unterscheiden, wobei es vorteilhaft ist, die Spikes 1 zu einer ersten Spikesetzpistole und die Spikes 2 zu einer zweiten Spikesetzpistole zu transportieren.

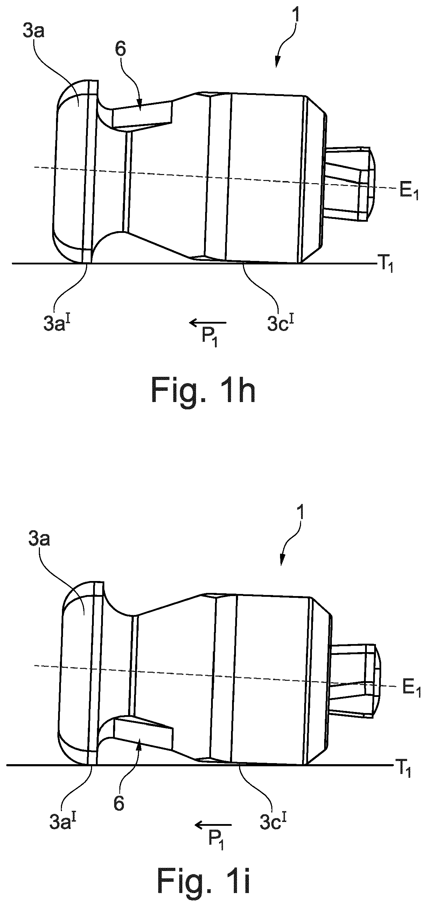

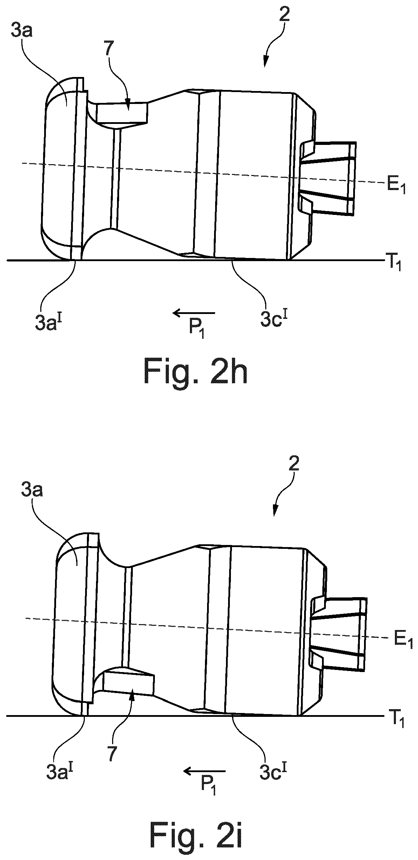

Fig. 1h, Fig. 1i, Fig. 2h, Fig. 2i zeigen je einen Spike 1 bzw. Spike 2. Die Transporteinrichtung ist durch eine Linie $T_1$ und die Transportrichtung durch einen Pfeil $P_1$ angedeutet. Bezogen auf die Transportrichtung (Pfeil $P_1$) ist der Spike 1, 2 mit seinem Fußflansch 3a voran ausgerichtet, wobei eine derartige Ausrichtung in bekannter Weise mit hoher Zuverlässigkeit möglich ist. Ob der Spike 1, 2 jedoch auf den ebenen Seitenflächen 3a', $3c^I$ der einen durch Teilung entlang der Ebene $E_1$ (Fig. 1b, Fig. 2b) erhaltenen Spikehälfte oder auf der anderen durch Teilung entlang der Ebene $E_1$ (Fig. 1b, Fig. 2b) erhaltenen Spikehälfte liegt, ist zufallsbedingt und mit den aktuell üblichen Spikeförderern nicht steuerbar. Die genaue Lage des Spikes 1, 2 auf der Transporteinrichtung beeinflusst unmittelbar die nachfolgende Orientierung im Zuführrohr und damit die Orientierung am Laufstreifen. Die in Fig. 1h und Fig. 2h gezeigte Lage ist die für den Setzvorgang gewünschte Lage. Die in Fig. 1i und Fig. 2i gezeigte Lage ist die für den Setzvorgang unerwünschte Lage. Die Spikes 1, 2 werden auf der Transporteinrichtung an einem Kamerasystem (nicht gezeigt) vorbeigeführt, welches den Schattenriss der Spikes 1, 2 aufnimmt und analysiert. Wie ein Vergleich von Fig. 1h mit Fig. 1i sowie ein Vergleich von Fig. 2h mit Fig. 2i zeigt, verleiht das Orientierungselement 6, 7 dem Spike 1, 2 einen von der Lage des Spikes 1, 2 abhängigen, zur Ebene $E_1$ asymmetrischen Schattenriss. Die Analyse des aufgenommenen Schattenrisses erfolgt durch Vergleich mit einem zuvor aufgenommen Referenzschattenriss. Erkennt das Kamerasystem einen Spike 1, 2 in der für den Setzvorgang unerwünschten Lage (Fig. 1i, Fig. 2i) wird der Spike 1, 2 insbesondere mittels eines aus einer Düse kommenden Luftstoßes von der Transporteinrichtung in den Vorratsbehälter zurücktransportiert. Derart ist sichergestellt, dass nur die auf der Transporteinrichtung korrekt ausgerichteten Spikes 1, 2 zum Zuführrohr transportiert werden. Bedingt durch die verschiedene Neigung der die Materialaufschläge 6b, 7b begrenzenden Flächenteile 12b, 13b (Fig. 1c: Flächenteil 12b, Winkel $\gamma$; Fig 2c: Flächenteil 13b, Winkel $\gamma'$) können die Spikes 1 von den Spikes 2 unterschieden werden, sodass ferner auch sichergestellt ist, dass nur Spikes 1 oder nur Spikes 2 weitertransportiert werden oder dass die Spikes 1 zu einer ersten Spikesetzpistole und die Spikes 2 zu einer zweiten Spikesetzpistole transportiert werden. Zweiteres ist mit einer entsprechend ausgeführten und gesteuerten Transporteinrichtung möglich. Insbesondere ist es daher auf komfortable und zuverlässige Weise möglich, einen Laufstreifen auf die gewünschte Weise gleichzeitig mit Spikes 1 und Spikes 2 zu versehen.

Bei Verwendung von einem ersten und einem zweiten Vorratsbehälter kann mittels des Kamerasystems ein in den "falschen" Vorratsbehälter gelangter Spike 1, 2 detektiert werden, bevor er das Zuführrohr zur Spikesetzpistole erreicht.

Wie bereits beschrieben, ist das Volumen des Materialaufschlages 6b, 7b kleiner oder gleich dem Volumen der Materialaussparung 6a, 7a und der Massenmittelpunkt der Spikepins 4, 5 liegt auf der Hauptachse $a_1$ des Spikes 1, 2.

Gemäß der ersten Ausführung ist somit das Volumen des Materialaufschlages 6b, 7b gleich dem Volumen der Materialaussparung 6a, 7a, wodurch die durch Teilung entlang der Ebene $E_1$ erhaltenen Spikehälften eine übereinstimmende Masse aufweisen. Die Wahrscheinlichkeit, dass der Spike 1, 2 auf der Transporteinrichtung die für den Setzvorgang gewünschte Lage (Orientierungselement 6, 7 "oben") einnimmt, ist gleichgroß bzw. im Wesentlichen gleichgroß wie die Wahrscheinlichkeit, dass der Spike 1, 2 auf der Transporteinrichtung die für den Setzvorgang unerwünschte Lage (Orientierungselement 6, 7 "unten") einnimmt.

Gemäß der zweiten Ausführung ist daher das Volumen des Materialaufschlages 6b, 7b kleiner als das Volumen der Materialaussparung 6a, 7a, sodass die durch Teilung entlang der Ebene $E_1$ erhaltene Spikehälfte mit Orientierungselement 6, 7 eine kleinere Masse als die Spikehälfte ohne Orientierungselement 6, 7 aufweist. Dadurch ist die Wahrscheinlichkeit, dass der Spike 1, 2 auf der Transporteinrichtung die für den Setzvorgang gewünschte Lage (Orientierungselement 6, 7 "oben") einnimmt größer als die Wahrscheinlichkeit, **dass der** Spike 1, 2 auf der Transporteinrichtung die für den Setzvorgang unerwünschte Lage (Orientierungselement 6, 7 "unten") einnimmt.

Bei einer dritten Ausführung ist der Spikepin 4, 5 derart im Spikekörper 3 verankert, dass sich der Massenmittelpunkt des Spikepins 4, 5 in der Spikehälfte ohne Orientierungselement 6, 7 befindet, sodass in der Folge die Masse der Spikehälfte mit Orientierungselement 6, 7 kleiner ist als die Masse der Spikehälfte ohne Orientierungselement 6, 7, wodurch die Wahrscheinlichkeit, dass der Spike 1, 2 auf der Transporteinrichtung die für den Setzvorgang gewünschte Lage einnimmt, größer ist als die Wahrscheinlichkeit, dass der Spike 1, 2 auf der Transporteinrichtung die für den Setzvorgang unerwünschte Lage einnimmt. Bevorzugter Weise ist der Spikepin 4, 5 derart versetzt, dass sich sein Massenmittelpunkt auf der Ebene $E_2$ befindet. Ferner ist es bevorzugt, wenn der Massenmittelpunkt des Spikepins 4, 5 zur Hauptachse $a_1$ des Spikes 1, 2 einen lichten Abstand von bis zu 0,50 mm, insbesondere von bis zu 0,25 mm, bevorzugt von bis zu 0,10 mm, aufweist.

Eine vierte Ausführung besteht in der Kombination der dritten Ausführung mit der ersten oder der zweiten Ausführung.

Bei sämtlichen Ausführungen weist somit die Spikehälfte mit Orientierungselement eine erste Masse und die Spikehälfte ohne Orientierungselement eine mit der ersten Masse überstimmende oder gegenüber der ersten Masse größere zweite Masse auf.

Die Erfindung ist auf die beschriebenen Ausführungsbeispiele nicht beschränkt.

Insbesondere können die Orientierungselemente eine von der beschriebenen Gestalt abweichende Gestalt aufweisen.

Die Orientierungselemente erstrecken sich in Draufsicht und bezogen auf die Hauptachse des Spikes bevorzugter Weise über einen Zentriwinkel von $\frac{360}{n} \pm 1°$, wobei gilt: n = 2, 3, 4, 5 oder 6. Solche Orientierungselemente lassen sich mit den üblichen mehrteiligen Werkzeugen auf besonders rationelle Weise ausformen. Die Abweichung von $\pm$ 1° gibt einen gewissen fertigungsbedingten Toleranzbereich wieder.

Bezugszeichenliste

| | |
|---|---|
| 1 | Spike |
| 2 | Spike |
| 3. | Spikeköper |
| 3a | Fußflansch |
| 3a$^{I}$ | ebene Seitenfläche |
| 3a$^{II}$ | gerundete Seitenfläche |
| 3a$^{III}$. | Oberseite |
| 3b | Mittelteil |
| 3b$^{I}$ | unterer Mittelteilabschnitt |

| | |
|---|---|
| 3b<sup>II</sup> | oberer Mittelteilabschnitt |
| 3c | Oberflansch |
| 3c<sup>I</sup> | ebene Seitenfläche |
| 3c<sup>II</sup> | gerundete Seitenfläche |
| 3c<sup>III</sup> | Oberseite |
| 3c<sup>IV</sup> | Randbereich |
| 3c<sup>IV'</sup> | ebene Randfläche |
| 3c<sup>IV"</sup> | gerundete Randfläche |
| 4 | Spikepin |
| 4a, 4a' | Griffkante |
| 4b, 4b' | Griffkante |
| 4c | Abriebschutzkuppel |
| 4h, 4h' | Spikepinhälfte |
| 5. | Spikepin |
| 5a | Griffkante |
| 5b, 5b' | Griffkante |
| 5h, 5h' | Spikepinhälfte |
| 6 | Orientierungselement |
| 6a | Materialaussparung |
| 6b | Materialaufschlag |
| 7 | Orientierungselement |
| 7a | Materialaussparung |
| 7b | Materialaufschlag |
| 8 | Ausnehmung |
| 9. | Ausnehmung |
| 10. | Begrenzungswand |
| 11 | Boden |
| 12 | Begrenzungsfläche |
| 12a, 12b | Flächenteil |
| 13 | Begrenzungsfläche |
| 13a, 13b | Flächenteil |
| $a_1$ | Hauptachse |
| $b_1$ | größte Breite |
| c1 | größte Länge |
| $d_1$ | maximale Dicke |
| $e_1, e_2, E_1, E_2$ | Ebene |
| $h_1$ | Hilfslinie |
| $P_1$ | Pfeil (Transportrichtung) |
| $t_1$ | maximale Tiefe |
| $T_1$ | Linie (Transporteinrichtung) |
| $S_{1c}, S_{1d}, S_{1e}, S_{1f}, S_{1g}$ | Pfeil (Sichtrichtung) |
| $S_{2c}, S_{2d}, S_{2e}, S_{2f}, S_{2g}$ | Pfeil (Sichtrichtung) |
| $\alpha$ | Winkel |
| $\beta, \beta'$ | Zentriwinkel |
| $\gamma, \gamma'$ | Winkel |

**Patentansprüche**

1. Spike (1, 2) zum Verankern im Laufstreifen eines Fahrzeugluftreifens, mit einer Hauptachse ($a_1$), einem einen Fußflansch (3a) umfassenden Spikekörper (3) und einem im Spikekörper (3) verankerten Spikepin (4, 5), wobei der Fußflansch (3a) bezüglich einer die Hauptachse ($a_1$) enthaltenden, den Spike (1, 2) in Spikehälften teilenden, ersten Ebene ($E_1$) in Draufsicht symmetrisch ist und in jeder Spikehälfte eine in Draufsicht gerade verlaufende Seitenfläche (3a<sup>I</sup>) aufweist, wobei der Spikepin (4, 5) in Draufsicht bezüglich einer einzigen Ebene ($e_1, e_2$) symmetrisch ist, welche

   a. senkrecht zur ersten Ebene ($E_1$) verläuft,
   b. mit der ersten Ebene ($E_1$) zusammenfällt oder
   c. parallel zur ersten Ebene ($E_1$) verläuft,
   wobei in einer der Spikehälften ein Orientierungselement (6, 7) ausgebildet ist, welches dem auf der einen

Seitenfläche (3a$^l$) des Fußflansches (3a) liegenden Spike (1, 2) und dem auf der anderen Seitenfläche (3a$^l$) des Fußflansches (3a) liegenden Spike (1, 2) einen lagespezifischen, zur ersten Ebene (E$_1$) asymmetrischen Schattenriss verleiht,

**dadurch gekenzeichnet,**

dass die Spikehälfte mit Orientierungselement (6, 7) eine erste Masse und die Spikehälfte ohne Orientierungselement (6, 7) eine mit der ersten Masse übereinstimmende oder gegenüber der ersten Masse größere zweite Masse aufweist.

2. Spike nach Anspruch 1, **dadurch gekennzeichnet, dass** der Spikekörper (3) einen taillierten Mittelteil (3b) umfasst, auf welchem das Orientierungselement (6, 7) ausgebildet ist, wobei das Orientierungselement (6, 7) vorzugsweise über den Bereich der Taillierung verläuft.

3. Spike (1, 2) nach Anspruch 1 oder 2, **dadurch gekennzeichnet, dass** das Orientierungselement (6, 7) aus einer Materialaussparung (6a, 7a) und einem Materialaufschlag (6b, 7b) gebildet ist,

   i. wobei das Volumen des Materialaufschlages (6b, 7b) mit dem Volumen der Materialaussparung (6a, 7a) übereinstimmt und wobei sich der Massenmittelpunkt des Spikepins (4, 5) in der Spikehälfte ohne Orientierungselement (6, 7) befindet oder

   ii. wobei das Volumen des Materialaufschlages (6b, 7b) kleiner ist als das Volumen der Materialaussparung (6a, 7a) und wobei sich der Massenmittelpunkt des Spikepins (4, 5) vorzugsweise in der Spikehälfte ohne Orientierungselement (6, 7) befindet.

4. Spike (1, 2) nach Anspruch 3, **dadurch gekennzeichnet, dass** der Massenmittelpunkt des Spikepins (4, 5) zur Hauptachse (a$_1$) des Spikes (1, 2) einen lichten Abstand von bis zu 0,50 mm, insbesondere von bis zu 0,25 mm, bevorzugt von bis zu 0,10 mm, aufweist.

5. Spike (1, 2) nach Anspruch 3 oder 4, **dadurch gekennzeichnet, dass** bei Variante ii) das Volumen des Materialaufschlages (6b, 7b) zumindest 80%, insbesondere höchstens 90%, des Volumens der Materialaussparung (6a, 7a) beträgt.

6. Spike (1, 2) nach einem der Ansprüche 3 bis 5, **dadurch gekennzeichnet, dass** die Materialaussparung (6a, 7a) und der Materialaufschlag (6b, 7b) eine gemeinsame Begrenzungsfläche (12, 13) aufweisen, welche sich aus einem den Materialaufschlag (6b, 7b) begrenzenden Flächenteil (12b, 13b) und einem die Materialaussparung (6a, 7a) begrenzenden Flächenteil (12a, 13a) zusammensetzt, wobei der den Materialaufschlag (6b, 7b) begrenzende Flächenteil (12b, 13b), im die Hauptachse (a$_1$) enthaltenden Querschnitt betrachtet, gerade sowie zur Hauptachse (a$_1$) unter einem Winkel ($\gamma$, $\gamma'$) von 0° bis $\pm18°$ verläuft.

7. Spike nach einem der Ansprüche 3 bis 6, **dadurch gekennzeichnet, dass** die Materialaussparung (6a, 7a) des Orientierungselementes (6, 7) an den Fußflansch (3a) angrenzt oder in diesen hineinragt.

8. Spike (1, 2) nach einem der Ansprüche 1 bis 7, **dadurch gekennzeichnet, dass** der Fußflansch (3a) bezüglich einer zweiten Ebene (E$_2$), welche durch die Hauptachse (a$_1$) und in Draufsicht senkrecht zur ersten Ebene (E$_1$) verläuft, symmetrisch ist.

9. Spike (1, 2) nach Anspruch 3 und 8, **dadurch gekennzeichnet, dass** sich der Massenmittelpunkt des Spikepins (4, 5) auf der zweiten Ebene (E$_2$) befindet.

10. Spike nach Anspruch 8 oder 9, **dadurch gekennzeichnet, dass** das Orientierungselement (6, 7) bezüglich der zweiten Ebene (E$_2$) symmetrisch ist.

11. Spike nach einem der Ansprüche 1 bis 10, **dadurch gekennzeichnet, dass** der Spikekörper (3) einen Oberflansch (3c) umfasst, welcher in jeder Spikehälfte eine ebene Seitenfläche (3c$^l$) aufweist, welche in Draufsicht parallel zu in dieser Spikehälfte verlaufenden Seitenfläche (3a$^l$) des Fußflansches (3a) verläuft.

12. Kombination von Spikes (1) eines ersten Typs mit insbesondere hinsichtlich einer guten Seitenkraftübertragung ausgestalteten Spikepins (4) und Spikes (2) eines zweiten Typs mit insbesondere hinsichtlich einer guten Umfangskraftübertragung ausgestalteten Spikepins (5), zum Bespiken eines Laufstreifens eines Fahrzeugluftreifens, wobei die Spikes (1, 2) gemäß Anspruch 6 ausgeführt sind,

**dadurch gekennzeichnet,**

> **dass** bei Spikes (1) des einen - ersten oder zweiten - Typs der Winkel ($\gamma$) des Flächenteiles (12b), welcher den Materialaufschlag (6b) begrenzt, 8° bis 18°, insbesondere bis zu 15°, bevorzugt bis zu 10°, beträgt und
>
> **dass** bei Spikes (2) des anderen - ersten oder zweiten - Typs der Winkel ($\gamma'$) des Flächenteiles (13b), welcher den Materialaufschlag (7b) begrenzt, 0° bis $\pm7°$, insbesondere 0° bis $\pm3°$ beträgt.

13. Fahrzeugluftreifen mit einem Laufstreifen mit Profilpositiven mit Spikes (1, 2), gemäß Anspruch 12.

**Claims**

1. Spike (1, 2) for anchoring in the tread of a pneumatic vehicle tyre, having a main axis ($a_1$), having a spike body (3), which comprises a foot flange (3a), and having a spike pin (4, 5), which is anchored in the spike body (3), wherein the foot flange (3a) is symmetrical in plan view in relation to a first plane ($E_1$), which contains the main axis ($a_1$) and divides the spike (1, 2) into spike halves, and has in each spike half a side surface ($3a^l$), which extends rectilinearly in plan view, wherein the spike pin (4, 5) is symmetrical in plan view in relation to a single plane ($e_1$, $e_2$), which

   > a. extends perpendicularly to the first plane ($E_1$),
   > b. coincides with the first plane ($E_1$), or
   > c. extends parallel to the first plane ($E_1$),
   > wherein, in one of the spike halves, there is formed an orientation element (6, 7), which imparts to the spike (1, 2) lying on one side surface ($3a^l$) of the foot flange (3a) and to the spike (1, 2) lying on the other side surface ($3a^l$) of the foot flange (3a) a positionally specific silhouette that is asymmetrical in relation to the first plane ($E_1$),
   > **characterized**
   > **in that** the spike half with an orientation element (6, 7) has a first mass and the spike half without an orientation element (6, 7) has a second mass, which corresponds to the first mass or is greater than the first mass.

2. Spike according to Claim 1, **characterized in that** the spike body (3) comprises a waisted middle part (3b) on which the orientation element (6, 7) is formed, wherein the orientation element (6, 7) preferably extends over the region of the waisted portion.

3. Spike (1, 2) according to Claim 1 or 2, **characterized in that** the orientation element (6, 7) is formed from a material cutout (6a, 7a) and extra material (6b, 7b),

   > i. wherein the volume of the extra material (6b, 7b) corresponds to the volume of the material cutout (6a, 7a), and wherein the centre of mass of the spike pin (4, 5) is situated in the spike half without an orientation element (6, 7), or
   > ii. wherein the volume of the extra material (6b, 7b) is smaller than the volume of the material cutout (6a, 7a), and wherein the centre of mass of the spike pin (4, 5) is preferably situated in the spike half without an orientation element (6, 7).

4. Spike (1, 2) according to Claim 3, **characterized in that** the centre of mass of the spike pin (4, 5) is at a clear distance of up to 0.50 mm, in particular of up to 0.25 mm, preferably of up to 0.10 mm, from the main axis ($a_1$) of the spike (1, 2).

5. Spike (1, 2) according to Claim 3 or 4, **characterized in that**, in the case of variant ii), the volume of the extra material (6b, 7b) is at least 80%, in particular at most 90%, of the volume of the material cutout (6a, 7a).

6. Spike (1, 2) according to one of Claims 3 to 5, **characterized in that** the material cutout (6a, 7a) and the extra material (6b, 7b) have a common boundary surface (12, 13), which is made up of a surface part (12b, 13b) delimiting the extra material (6b, 7b) and of a surface part (12a, 13a) delimiting the material cutout (6a, 7a), wherein the surface part (12b, 13b) delimiting the extra material (6b, 7b), when viewed in a cross section containing the main axis ($a_1$), extends rectilinearly and at an angle ($\gamma$, $\gamma'$) of 0° to $\pm18°$ to the main axis ($a_1$).

7. Spike according to one of Claims 3 to 6, **characterized in that** the material cutout (6a, 7a) of the orientation element (6, 7) adjoins the foot flange (3a) or projects into the latter.

8. Spike (1, 2) according to one of Claims 1 to 7, **characterized in that** the foot flange (3a) is symmetrical in relation to a second plane ($E_2$), which extends through the main axis ($a_1$) and, in plan view, perpendicularly to the first plane ($E_1$).

9.  Spike (1, 2) according to Claims 3 and 8, **characterized in that** the centre of mass of the spike pin (4, 5) is situated on the second plane ($E_2$).

10. Spike according to Claim 8 or 9, **characterized in that** the orientation element (6, 7) is symmetrical in relation to the second plane ($E_2$).

11. Spike according to one of Claims 1 to 10, **characterized in that** the spike body (3) comprises a top flange (3c), which has in each spike half a planar side surface ($3c^l$) which, in plan view, extends parallel to the side surface ($3a^l$) of the foot flange (3a) that extends **in that** spike half.

12. Combination of spikes (1) of a first type, with spike pins (4) designed in particular in consideration of good lateral-force transmission, and spikes (2) of a second type, with spike pins (5) designed in particular in consideration of good circumferential-force transmission, for providing a tread of a pneumatic vehicle tyre with spikes, wherein the spikes (1, 2) are designed according to Claim 6,
    **characterized**

    **in that**, in the case of spikes (1) of one - the first or second - type, the angle ($\gamma$) of the surface part (12b) delimiting the extra material (6b) is 8° to 18°, in particular up to 15°, preferably up to 10°, and
    **in that**, in the case of spikes (2) of the other - the first or second - type, the angle ($\gamma$') of the surface part (13b) delimiting the extra material (7b) is 0° to $\pm7°$, in particular 0° to $\pm3°$.

13. Pneumatic vehicle tyre having a tread with profile positives with spikes (1, 2) according to Claim 12.

**Revendications**

1.  Clou (1, 2) destiné à être ancré dans la bande de roulement d'un pneumatique de véhicule, avec un axe principal ($a_1$), un corps de clou (3) comprenant une bride de pied (3a) et une broche de clou (4, 5) ancrée dans le corps de clou (3), la bride de pied (3a) étant symétrique en vue de dessus par rapport à un premier plan ($E_1$) contenant l'axe principal ($a_1$), divisant le clou (1, 2) en moitiés de clou et présentant dans chaque moitié de clou une surface latérale ($3a^l$) s'étendant de manière rectiligne en vue de dessus, la broche de clou (4, 5) étant symétrique en vue de dessus par rapport à un seul plan ($e_1$, $e_2$) qui

    a. est perpendiculaire au premier plan ($E_1$),
    b. coïncide avec le premier plan ($E_1$) ; ou
    c. est parallèle au premier plan ($E_1$),
    un élément d'orientation (6, 7) étant réalisé dans l'une des moitiés de clou, lequel confère au clou (1, 2) situé sur l'une des surfaces latérales ($3a^l$) de la bride de pied (3a) et au clou (1, 2) situé sur l'autre surface latérale ($3a^l$) de la bride de pied (3a) un contour d'ombre spécifique à la position, asymétrique par rapport au premier plan ($E_1$),
    **caractérisé**
    **en ce que** la moitié de clou avec élément d'orientation (6, 7) présente une première masse et la moitié de clou sans élément d'orientation (6, 7) présente une deuxième masse identique à la première masse ou supérieure à la première masse.

2.  Clou selon la revendication 1, **caractérisé en ce que** le corps de clou (3) comprend une partie centrale rétrécie (3b) sur laquelle est réalisé l'élément d'orientation (6, 7), l'élément d'orientation (6, 7) s'étendant de préférence sur la zone du rétrécissement.

3.  Clou (1, 2) selon la revendication 1 ou 2, **caractérisé en ce que** l'élément d'orientation (6, 7) est formé d'un évidement de matériau (6a, 7a) et d'un bossage de matériau (6b, 7b),

    i. le volume du bossage de matériau (6b, 7b) coïncidant avec le volume de l'évidement de matériau (6a, 7a) et le centre de masse de la broche de clou (4, 5) se trouvant dans la moitié de clou sans élément d'orientation (6, 7) ou
    ii. le volume du bossage de matériau (6b, 7b) étant plus petit que le volume de l'évidement de matériau (6a, 7a) et le centre de masse de la broche de clou (4, 5) se trouvant de préférence dans la moitié de clou sans élément d'orientation (6, 7).

4.  Clou (1, 2) selon la revendication 3, **caractérisé en ce que** le centre de masse de la broche de clou (4, 5) présente par rapport à l'axe principal ($a_1$) du clou (1, 2) une distance libre allant jusqu'à 0,50 mm, notamment jusqu'à 0,25 mm, de préférence jusqu'à 0,10 mm.

5. Clou (1, 2) selon la revendication 3 ou 4, **caractérisé en ce que**, dans la variante ii), le volume du bossage de matériau (6b, 7b) représente au moins 80 %, notamment au plus 90 %, du volume de l'évidement de matériau (6a, 7a).

6. Clou (1, 2) selon l'une quelconque des revendications 3 à 5, **caractérisé en ce que** l'évidement de matériau (6a, 7a) et le bossage de matériau (6b, 7b) présentent une surface de délimitation commune (12, 13) qui se compose d'une partie de surface (12b, 13b) délimitant le bossage de matériau (6b, 7b) et d'une partie de surface (12b, 13b) délimitant l'évidement de matériau (6a, 7a), la partie de surface (12b, 13b) délimitant le bossage de matériau (6b, 7b), vue en coupe transversale contenant l'axe principal ($a_1$), s'étendant de manière rectiligne ainsi que selon un angle ($\gamma, \gamma'$) de 0° à $\pm$18° par rapport à l'axe principal ($a_1$).

7. Clou selon l'une quelconque des revendications 3 à 6, **caractérisé en ce que** l'évidement de matériau (6a, 7a) de l'élément d'orientation (6, 7) est adjacent à la bride de pied (3a) ou fait saillie dans celle-ci.

8. Clou (1, 2) selon l'une quelconque des revendications 1 à 7, **caractérisé en ce que** la bride de pied (3a) est symétrique par rapport à un deuxième plan ($E_2$) qui passe par l'axe principal ($a_1$) et qui est perpendiculaire au premier plan ($E_1$) en vue de dessus.

9. Clou (1, 2) selon les revendications 3 et 8, **caractérisé en ce que** le centre de masse de la broche de clou (4, 5) se trouve sur le deuxième plan ($E_2$).

10. Clou selon la revendication 8 ou 9, **caractérisé en ce que** l'élément d'orientation (6, 7) est symétrique par rapport au deuxième plan ($E_2$).

11. Clou selon l'une quelconque des revendications 1 à 10, **caractérisé en ce que** le corps de clou (3) comprend une bride supérieure (3c) qui présente dans chaque moitié de clou une surface latérale plane ($3c^l$) qui, en vue de dessus, s'étend parallèlement à la surface latérale ($3a^l$) de la bride de pied (3a) s'étendant dans cette moitié de clou.

12. Combinaison de clous (1) d'un premier type avec des broches de clou (4) conçues notamment pour une bonne transmission de force latérale et de clous (2) d'un deuxième type avec des broches de clou (5) conçues notamment pour une bonne transmission de force périphérique, pour le cloutage d'une bande de roulement d'un pneumatique de véhicule, les clous (1, 2) étant réalisés selon la revendication 6,
**caractérisée en ce que**

pour des clous (1) d'un - premier ou deuxième - type, l'angle ($\gamma$) de la partie de surface (12b) qui délimite le bossage de matériau (6b) est de 8° à 18°, notamment jusqu'à 15°, de préférence jusqu'à 10°, et
**en ce que**, pour des clous (2) de l'autre - premier ou deuxième - type, l'angle ($\gamma'$) de la partie de surface (13b) qui délimite le bossage de matériau (7b) est de 0° à $\pm$7°, notamment de 0° à $\pm$3°.

13. Pneumatique de véhicule avec une bande de roulement avec des éléments positifs de profil avec des clous (1, 2), selon la revendication 12.

**Fig. 1a**

**Fig. 1b**

Fig. 1c : Sicht $S_{1c}$    Fig. 1d : Sicht $S_{1d}$    Fig. 1e : Sicht $S_{1e}$

EP 4 186 714 B1

6b

12

6

6a

3b$^{I}$  3a$^{III}$

3a

Fig. 1f :Sicht S$_{1f}$

3b$^{II}$

6b

12

6

6a

3b$^{I}$

3a$^{III}$

3a

Fig. 1g :Sicht S$_{1g}$

Fig. 1h

Fig. 1i

Fig. 2a

Fig. 2b

Fig. 2c :Sicht $S_{2c}$

Fig. 2d :Sicht $S_{2d}$

Fig. 2e :Sicht $S_{2e}$

Fig. 2f :Sicht $S_{2f}$

Fig. 2g :Sicht $S_{2g}$

Fig. 2h

Fig. 2i

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3578393 A1
- EP 3533628 A1
- EP 3590736 A1
- WO 2014122570 A1
- RU 2152318 C1